# FASCICULE DE BREVET EUROPEEN

(11) **EP 2 132 347 B1**
(45) Date de publication et mention de la délivrance du brevet: **01.06.2011**
(21) Numéro de dépôt: 07726637.7
(22) Date de dépôt: 06.03.2007
(51) Int. Cl.: C22B 17/00, C01B 25/238

(54) **PROCEDE DE TRAITEMENT DE SOLIDES CADMIFERES**
VERFAHREN ZUR VERARBEITUNG VON CADMIUMHALTIGEN FESTSTOFFEN
METHOD FOR PROCESSING CADMIFEROUS SOLIDS

(43) Date de publication de la demande: 16.12.2009
(73) Titulaire: Centre D'etudes Et De Recherches Des Phosphates Mineraux, Casablanca (MA); Prayon Technologies, 4480 Engis (BE)
(72) Inventeur: KOSSIR, Abdelaâli, Casablanca (MA); CAPPELLE, Philippe, B-4130 Esneux (BE)
(74) Mandataire: Claeys, Pierre
(86) Numéro de dépôt international: PCT/EP2007/052066
(87) Numéro de publication internationale: WO 2008/113403

(56) Documents cités:
- EP-A- 0 253 454
- EP-A2- 0 333 489
- WO-A-91/00244
- FR-A1- 2 687 657
- MA-A1- 23 803
- SADEGH SAFARZADEH ET AL: "A review on hydrometallurgical extraction and recovery of cadmium from various resources" MINERALS ENGINEERING, PERGAMON PRESS , OXFORD, GB, vol. 20, no. 3, 9 février 2007 (2007-02-09), pages 211-220, XP005880783 ISSN: 0892-6875

## Description

La présente invention est relative à un procédé de traitement de solides cadmifères comportant du sulfate de calcium anhydrite et/ou hémihydrate présentant une teneur en cadmium.

Le Cd concerne plusieurs industries pouvant être minières, métalliques ou autres. On peut le retrouver notamment lors de processus de traitement et/ou de valorisation de solutions phosphoriques, sulfuriques, nitriques, etc. A partir de ces solutions le Cd peut être récupéré par cocristallisation avec du sulfate de calcium sous sa forme anhydrite et/ou hémihydrate. Par ailleurs, le sulfate de calcium hémihydrate obtenu dans certains procédés de fabrication d'acide phosphorique par voie humide peut renfermer une concentration en cadmium importante le rendant impropre aux traitements de valorisation ou de mise en décharge.

Par solides cadmifères, il faut entendre toute phase solide contenant du cadmium, que ce soit sous la forme de blocs, de poudre, d'agglomérats, ou encore de suspension épaisse, comme par exemple un gâteau de filtration. Un solide cadmifère suivant l'invention peut aussi contenir naturellement du cadmium.

On connaît depuis un certain temps des procédés qui ont pour but de traiter ce type de solides cadmifères afin d'en extraire le cadmium. Ces procédés consistent à faire digérer les solides cadmifères par de l'acide sulfurique présentant une concentration avantageusement de l'ordre de 0,1 M à 2 M et cela à une température comprise entre 0°C et 30°C. Le cadmium est largué en solution dans l'acide sulfurique tandis que le sulfate de calcium est recristallisé (réhydraté) sous forme de dihydrate (voir par exemple WO91/00244). Ce procédé présente une cinétique très lente et nécessite entre autres une durée supérieure à une dizaine d'heures dans un milieu fort corrosif.

Un procédé fort semblable a été proposé dans le brevet marocain MA 23803. Pour accélérer la recristallisation du sulfate de calcium anhydrite et/ou hémihydrate en dihydrate, on propose l'ajout à l'acide sulfurique d'un additif, tel que de la silice ou des produits à base de silice.

Dans ces deux procédés qui se déroulent en milieu acide, la récupération finale du cadmium en solution est difficile et consommatrice de réactifs. La précipitation du cadmium, par exemple du sulfure de cadmium par addition de NaHS, est très peu efficace en milieu acide.

La présente invention a pour but la mise au point d'un procédé de traitement des solides cadmifères en question qui soit rapide, tout en rendant la récupération finale du cadmium plus aisée. Avantageusement ce procédé doit donner lieu à un concentré cadmifère solide à teneur élevée en cadmium et de volume réduit ce qui facilite sa mise en dépôt ou sa valorisation.

Pour résoudre ces problèmes, il est prévu, suivant l'invention, un procédé tel qu'indiqué au début, ce procédé comprenant
- une extraction de cadmium à partir desdits solides cadmifères par leur mise en contact avec une solution aqueuse de sulfate de métal alcalin, et
- une séparation solide/liquide entre une phase solide à base de sulfate de calcium dihydrate à teneur en cadmium appauvrie par rapport à ladite teneur en cadmium du sulfate de calcium anhydrite et/ou hémihydrate et une phase aqueuse contenant du sulfate de métal alcalin et du cadmium en solution.

Comme sulfate de métal alcalin, on envisage notamment du sulfate de sodium, de potassium ou de lithium, en particulier du sulfate de sodium. Le sulfate de sodium peut être utilisé sous forme de sel qui est dissous dans un milieu aqueux pour l'extraction. Il peut être formé par mélange d'acide sulfurique et de soude juste avant l'extraction ou in situ dans le réacteur de digestion.

La solution aqueuse de sulfate de métal alcalin, en particulier de sodium, peut présenter une concentration en sulfate qui varie entre 1 % en poids et la limite de solubilité du sulfate dans l'eau. La concentration en sulfate de sodium dans la solution aqueuse servant à l'extraction est avantageusement comprise entre 5 et 15 % en poids, de préférence entre 7 et 12 % en poids, calculés sur base des ions sulfate.

L'extraction a lieu dans un milieu aqueux présentant un taux de matières solides compris entre 0,5 et 50 % en poids, avantageusement entre 15 et 30 % en poids, de préférence entre 20 et 25 % en poids.

La température de l'extraction est maintenue entre 5 et 60°C, avantageusement entre 5 et 30°C, de préférence entre 15 et 25°C.

Le pH pendant l'extraction est avantageusement compris entre 1 et 6, de préférence entre 3 et 6, c'est-à-dire à une valeur proche de la neutralité. L'extraction s'effectue donc avec une cinétique rapide et dans un milieu très peu corrosif, ce qui facilite la manipulation et diminue les coûts d'investissement et de maintenance.

Avantageusement, la solution aqueuse de sulfate de métal alcalin de l'extraction peut contenir un complexant qui favorise le passage et le maintien en solution du cadmium, ce qui donne du sulfate de calcium final à très basse teneur en Cd. Comme complexant, on peut envisager des chlorures et des fluorures, par exemple de calcium, sodium ou autres, de l'EDTA (acide éthylènediamine tétraacétique), ou tout autre générateur d'anion capable de former un complexe avec le Cd. On utilisera de préférence du chlorure de sodium.

On constate que, comme dans les procédés de l'état antérieur de la technique cité, il se produit pendant l'étape d'extraction une dissolution du cadmium qui est largué par le sulfate de calcium dans la solution aqueuse de sulfate de sodium. Simultanément, le sulfate de calcium anhydrite et/ou hémihydrate se réhydrate sous la forme cristalline de dihydrate qui reste en suspension dans le milieu aqueux.

Le mélange solide-liquide est alors séparé par toute technique de séparation appropriée : décantation, filtration, centrifugation, etc. Le résidu solide est formé de sulfate de calcium dihydrate exceptionnellement bien décadmié, qui peut présenter une teneur en Cd inférieure à 30 ppm, en particulier à 10 ppm et avantageusement à 3 ppm. Ce gypse peut être entreposé ou mis sur le marché, comme il peut être partiellement recyclé dans le procédé, comme on le verra par la suite, éventuellement même après un entreposage.

Suivant une forme avantageuse de réalisation de l'invention, le procédé comprend une récupération du cadmium à partir de ladite phase aqueuse contenant du sulfate de métal alcalin et du cadmium en solution et un éventuel recyclage d'une solution aqueuse de sulfate de métal alcalin décadmiée à l'étape d'extraction. Cette récupération peut s'effectuer selon toute méthode chimique ou électrochimique appropriée, connue de l'homme de métier, ou encore par échange ionique. De préférence, on effectue une précipitation du cadmium aux sulfures ou à la soude.

Suivant une forme de réalisation perfectionnée de l'invention, ladite récupération comprend un ajout de sulfure de métal alcalin à ladite phase aqueuse contenant du sulfate de métal alcalin et du cadmium en solution, une précipitation d'une phase solide constituée principalement de sulfure de cadmium, et une séparation de cette phase solide à partir d'une solution aqueuse de sulfate de métal alcalin décadmiée. Ce processus simple à mettre en oeuvre permet de récupérer le cadmium sous la forme d'un concentré de faible volume, stable, à base de sulfure de cadmium. La phase liquide aqueuse à base de sulfate de métal alcalin, de préférence de sodium, qui a été décadmiée, peut à présent avantageusement être recyclée à l'étape d'extraction.

Comme on l'a déjà indiqué précédemment, les solides cadmifères à traiter suivant l'invention peuvent être issus d'un procédé de décadmiation d'une solution aqueuse contenant du cadmium, comportant une cocristallisation dans celle-ci de cadmium avec du sulfate de calcium anhydrite et/ou hémihydrate. La solution aqueuse est par exemple de nature phosphorique, sulfurique ou phosphosulfurique, mais elle peut aussi contenir d'autres composants, par exemple de l'acide nitrique, ou des mélanges d'acides. Dans cette solution aqueuse riche en cadmium, le procédé de décadmiation prévoit l'introduction d'un composé de calcium capable de former dans cette solution un précipité de sulfate de calcium anhydrite et/ou hémihydrate qui va coprécipiter le cadmium.

Dans une solution aqueuse cadmifère contenant déjà des ions sulfate on peut introduire par exemple de la chaux, un sel de calcium, en particulier du carbonate, ou bien entendu du sulfate de calcium ou du phosphate de calcium naturel.

Dans une solution aqueuse cadmifère dépourvue d'ions sulfate, on peut introduire du sulfate de calcium. Celui-ci peut être préparé avant l'introduction à partir d'acide sulfurique et d'un composé de calcium, ou même in situ dans le réacteur de décadmiation. On peut aussi procéder à un recyclage de ladite phase solide à base de sulfate de calcium dihydrate à teneur appauvrie en cadmium dans ladite cocristallisation, à titre de composé de calcium susdit.

D'autres particularités du procédé suivant l'invention sont indiquées dans les revendications annexées.

L'invention va à présent être décrite plus en détail en faisant référence à la figure unique annexée qui représente un schéma d'écoulement d'un procédé suivant l'invention.

Dans cet exemple de réalisation on a illustré le traitement d'un rejet cadmifère issu d'un procédé de préparation d'acide phosphorique obtenu par voie humide. La solution aqueuse d'acide phosphorique à teneur en P₂O₅ de 45-60 % en poids a été produite à partir d'un minerai cadmifère et elle contient donc une teneur élevée en cadmium, dont il faudrait avantageusement la débarrasser.

La solution aqueuse d'acide phosphorique à décadmier est introduite en 1 dans une cuve de cocristallisation 2 avec un composé de calcium qui est alimenté en 3 et qui doit permettre une précipitation de sulfate de calcium. Dans l'exemple de réalisation illustré, l'acide phosphorique à traiter a été obtenu par attaque phospho-sulfurique du minerai. Le composé de calcium à introduire en 3 dans la cuve de cocristallisation 2 est un sulfate de calcium, par exemple du gypse. On observe alors, en plus de la précipitation de sulfate de calcium sous forme d'anhydrite, d'hémihydrate ou d'un mélange des deux, une cocristallisation du cadmium dans le réseau cristallin de sulfate de calcium. La boue de cocristallisation, riche en cadmium, est alors transférée par le conduit 4 à un dispositif de filtration 5, où elle peut être filtrée et lavée par une eau de lavage introduite en 6.

Le filtrat est formé d'un acide phosphorique profondément décadmié qui peut présenter une teneur en Cd allant jusqu'à 2 ppm ou moins. Ce filtrat est évacué en 7.

Le gâteau de filtration présente dans l'exemple illustré une teneur en cadmium de 1042 ppm.

Il est amené en 8 à une cuve de décadmiation 9, dans laquelle est introduite en 10 une solution de métal alcalin. Dans l'exemple illustré, il s'agit d'une solution de Na₂SO₄ à une concentration de l'ordre de 10 % en poids, calculés sur base des ions sulfate.

La décadmiation a lieu à une température de 19°C et à un pH de l'ordre de 4,88. Le taux de matières solides dans le milieu est de l'ordre de 21,9 % en poids.

On laisse digérer le gâteau de filtration, puis les boues de décadmiation sont transférées par le conduit 11 dans un dispositif de filtration 12, où elles peuvent être filtrées et lavées par une eau de lavage introduite en 13.

Le gâteau de filtration est formé d'un rejet solide exempt de cadmium, qui est formé dans le présent exemple de sulfate de calcium dihydrate. Etant donné son haut degré de pureté on peut, en 14, transférer ce sulfate de calcium dihydrate à un stockage non représenté, pour une exploitation industrielle ultérieure. On peut aussi par la voie 15 le recycler au moins partiellement comme composé de calcium à introduire en 3 dans la cuve de cocristallisation 2.

Le filtrat est formé d'une solution de sulfate de sodium renfermant du cadmium en solution. Dans l'exemple illustré, il est introduit par le conduit 16 dans une cuve de précipitation 17, dans laquelle on introduit en 18 un sulfure, par exemple NaHS. Une phase solide à base de sulfure de cadmium précipite.

Par un conduit 19, on transfère alors les boues de précipitation au sulfure à un dispositif de séparation solide/liquide 20.

Le gâteau de filtration évacué en 21 est formé d'un rejet solide à base de sulfure de cadmium, où la concentration en Cd peut être de l'ordre de 32 % en poids. Le cadmium est donc très concentré dans un volume réduit de matière solide ce qui représente un avantage non négligeable pour la mise en dépôt du rejet cadmifère.

Le filtrat est une solution de sulfate de sodium sensiblement totalement décadmiée. Elle présente moins de 1 ppm de Cd. Elle peut être évacuée, ou avantageusement être au moins partiellement recyclée par le conduit 22 à l'entrée 10 de la cuve de décadmiation 9.

Les mêmes conditions de procédé ont été appliquées à ce procédé à l'exception du fait qu'au lieu d'introduire en 10 une solution de sulfate de métal alcalin on introduit dans un premier essai comparatif de l'acide sulfurique 0,5M et dans un deuxième essai comparatif de l'acide sulfurique 2,0M. Par ailleurs, pour chaque substance, on procède à des prélèvements pour analyse après une durée de digestion dans la cuve 9 de 4, 8 et 12 heures.

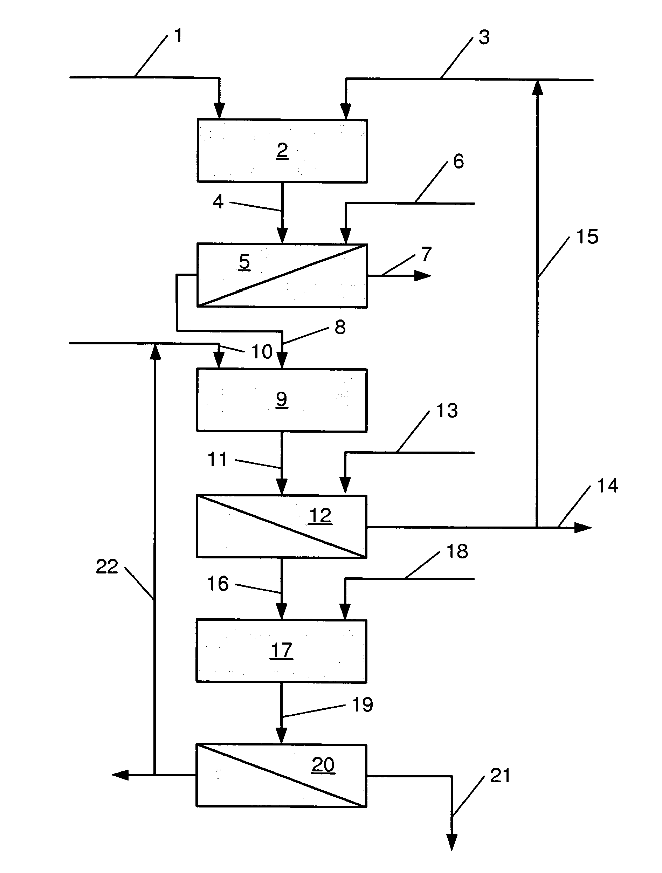

Les résultats obtenus dans ces deux essais comparatifs et dans l'installation selon la figure 1 mettant en oeuvre un procédé suivant l'invention, sont indiqués dans le tableau ci-dessous.

**Tableau**

| Conditions dans la cuve 9 | H₂SO₄ 0,5M | | | H₂SO₄ 2M | | | Na₂SO₄ | | |
|---|---|---|---|---|---|---|---|---|---|
| pH | 1,89 | | | 0,61 | | | 4,88 | | |
| % SO₄ | 4,7 | | | 16,4 | | | 10,11 | | |
| Taux de solide (%) | 21,5 | | | 22,3 | | | 21,9 | | |
| Température (°C) | 18 | | | 19 | | | 19 | | |
| Temps (h) | 4 | 8 | 12 | 4 | 8 | 12 | 4 | 8 | 12 |
| Rendement de décadmiation du solide (%) | 13 | 24 | 34 | 31 | 51 | 67 | 66 | 99 | >99 |

| | | | | | | | | | |
|---|---|---|---|---|---|---|---|---|---|
| Teneur initiale en cadmium du solide cadmifère transféré en 8 dans la cuve de décadmiation 9 : 1042 ppm. | | | | | | | | | |

Le rendement d'extraction du cadmium est observé à l'examen du solide évacué du dispositif de filtration 12 et du filtrat passant par le conduit 16. Comme on peut le voir le rendement d'extraction est idéal dans le procédé suivant l'invention, et cela en un temps court.

La présente invention va à présent être illustrée à l'aide de quelques exemples non limitatifs.

### Exemple 1

Après décadmiation d'une solution d'acide phosphorique, une matière solide cadmifère constituée principalement d'anhydrite a été obtenue. Ce solide titre 640 ppm en Cd. Le traitement de ce solide dans une solution de sulfate de sodium à 8 % en poids de SO₄ et à température ambiante a permis d'obtenir un rejet décadmié titrant moins de 3 ppm en Cd.

### Exemple 2

Un solide cadmifère ayant une teneur de 321 ppm en Cd a été mis en contact d'une solution de sulfate de sodium préparée par neutralisation d'acide sulfurique par de la soude. La réaction a eu lieu en réacteur agité en présence de sulfate de sodium à une concentration de 8,21 % en poids de SO₄. A la fin de la réaction qui s'est déroulée à 22°C le solide séparé ne contenait plus que 1 ppm en Cd.

### Exemple 3

La décadmiation d'une solution d'acide phosphorique titrant 28 ppm en Cd par cocristallisation de Cd et d'anhydrite a conduit à l'obtention d'un solide titrant 420 ppm en Cd. Le traitement de ce solide par une solution aqueuse de sulfate de sodium à 10 % de SO₄ a conduit à l'obtention d'une solution de sulfate de sodium dont la concentration en Cd est de 120 ppm.

La précipitation du Cd en solution par ajout de NaHS a permis d'obtenir, après filtration, une phase solide constituée principalement de sulfure de cadmium et où la concentration en Cd est de 32 %. La solution de sulfate de sodium décadmiée titre moins de 1 ppm en Cd.

### Exemple 4

La décadmiation d'une solution d'acide phosphorique titrant 71 ppm en Cd par cocristallisation du Cd avec de l'anhydrite a conduit à l'obtention d'un solide titrant 1063 ppm de Cd. Le traitement de ce solide par une solution de sulfate de sodium à 10 % de SO₄ a conduit à l'obtention d'une solution de sulfate de sodium très riche en Cd et du sulfate de calcium sous forme de gypse à une concentration de 8 ppm en Cd.

La reprise d'un autre échantillon d'anhydrite à 1063 ppm en Cd avec du sulfate de sodium additionné de NaCl de manière à avoir en solution une concentration de chlorure égale à 1 M conduit dans les mêmes conditions que ci-dessus à un rejet décadmié renfermant moins de 1 ppm en Cd.

## Revendications

1. Procédé de traitement de solides cadmifères comportant du sulfate de calcium anhydrite et/ou hémihydrate présentant une teneur en cadmium,
**caractérisé en ce qu'**il comprend
- une extraction de cadmium à partir desdits solides cadmifères par leur mise en contact avec une solution aqueuse de sulfate de métal alcalin, et
- une séparation solide/liquide entre une phase solide à base de sulfate de calcium dihydrate à teneur en cadmium appauvrie par rapport à ladite teneur en cadmium du sulfate de calcium anhydrite et/ou hémihydrate et une phase aqueuse contenant du sulfate de métal alcalin et du cadmium en solution.

2. Procédé suivant la revendication 1, **caractérisé en ce que** ladite solution aqueuse de sulfate de métal alcalin présente une concentration en sulfate comprise entre 1 % en poids et la limite de solubilité dans l'eau du sulfate de métal alcalin.

3. Procédé suivant l'une des revendications 1 et 2, **caractérisé en ce que** l'extraction a lieu dans un milieu présentant un taux de matières solides compris entre 0,5 et 50 % en poids.

4. Procédé suivant l'une des revendications 1 à 3, **caractérisé en ce que** l'extraction est maintenue à une température comprise entre 5 et 60°C, de préférence entre 5 et 30°C.

5. Procédé suivant l'une des revendications 1 à 4, **caractérisé en ce que** l'extraction a lieu à un pH compris entre 1 et 6, de préférence entre 3 et 6.

6. Procédé suivant l'une quelconque des revendications 1 à 5, **caractérisé en ce que** lesdits solides cadmifères sont issus d'un procédé de décadmiation d'une solution aqueuse contenant du cadmium, comportant une cocristallisation, dans celle-ci, de cadmium avec du sulfate de calcium anhydrite et/ou hémihydrate.

7. Procédé suivant la revendication 6, **caractérisé en ce que** ledit procédé de décadmiation est appliqué à une solution aqueuse phosphorique, sulfurique, phosphosulfurique ou nitrique ou à une solution constituée d'un mélange de deux ou plusieurs acides, en particulier à une solution d'acide phosphorique contenant du cadmium.

8. Procédé suivant l'une des revendications 1 à 7, **caractérisé en ce que** ladite séparation solide/liquide est effectuée par décantation, filtration ou centrifugation.

9. Procédé suivant l'une quelconque des revendications 1 à 8, **caractérisé en ce que** ladite phase solide à base de sulfate de calcium dihydrate à teneur en cadmium appauvrie est entreposée et/ou recyclée.

10. Procédé suivant l'une quelconque des revendications 1 à 9, **caractérisé en ce que** ladite solution aqueuse de sulfate de métal alcalin utilisée pour l'étape d'extraction contient au moins un complexant qui favorise un passage et un maintien du cadmium en solution.

11. Procédé suivant l'une des revendications 1 à 10, **caractérisé en ce qu'**il comprend une récupération du cadmium à partir de ladite phase aqueuse contenant du sulfate de métal alcalin et du cadmium en solution et éventuellement un recyclage d'une solution aqueuse de sulfate de métal alcalin décadmiée à l'étape d'extraction.

12. Procédé suivant la revendication 11, **caractérisé en ce que** ladite récupération peut se faire par voie chimique ou électrochimique ou par échange ionique.

13. Procédé suivant la revendication 12, **caractérisé en ce que** la récupération par voie chimique comprend un ajout de sulfure de métal alcalin à ladite phase aqueuse contenant du sulfate de métal alcalin et du cadmium en solution, une précipitation d'une phase solide contenant principalement du sulfure de cadmium, et une séparation de cette phase solide à partir d'une solution aqueuse de sulfate de métal alcalin décadmiée.

14. Procédé suivant l'une ou l'autre des revendications 6 et 7, **caractérisé en ce que** ladite cocristallisation comprend une introduction dans la solution aqueuse contenant du cadmium à décadmier d'un composé de calcium capable de former dans cette solution un précipité de sulfate de calcium anhydrite et/ou hémihydrate.

15. Procédé suivant la revendication 14, **caractérisé en ce qu'**il comprend un recyclage de ladite phase solide à base de sulfate de calcium dihydrate à teneur appauvrie en cadmium dans ladite cocristallisation, à titre de composé de calcium susdit.

## Claims

1. A method for processing cadmiferous solids including calcium sulfate anhydrite and/or hemihydrate having a cadmium content,
**characterized in that** it comprises
- cadmium extraction from said cadmiferous solids by putting them into contact with an aqueous solution of an alkaline metal sulfate, and
- solids/liquid separation between a solid phase based on calcium sulfate dehydrate with a depleted cadmium content relatively to said cadmium content of calcium sulfate anhydrite and/or hemihydrate and an aqueous phase containing alkaline metal sulfate and cadmium in solution.

2. The method according to claim 1, **characterized in that** said aqueous alkaline metal sulfate solution has a sulfate concentration comprised between 1% by weight and the water solubility limit of the alkaline metal sulfate.

3. The method according to one of claims 1 and 2, **characterized in that** the extraction takes place in a medium having a content of solids comprised between 0.5% and 50% by weight.

4. The method according to one of claims 1 to 3, **characterized in that** the extraction is maintained at a temperature comprised between 5 and 60°C, preferably between 5 and 30°C.

5. The method according to one of claims 1 to 4, **characterized in that** the extraction takes place at a pH comprised between 1 and 6, preferably between 3 and 6.

6. The method according to any of claims 1 to 5, **characterized in that** said cadmiferous solids stem from a method for decadmiation of an aqueous solution containing cadmium, including co-crystallization, in the latter, of cadmium with calcium sulfate anhydrite and/or hemihydrate.

7. The method according to claim 6, **characterized in that** said decadmiation method is applied to a phosphoric, sulfuric, phosphosulfuric or nitric aqueous solution or to a solution consisting of a mixture of two or more acids, in particular to a solution of phosphoric acid containing cadmium.

8. The method according to one of claims 1 to 7, **characterized in that** said solid/liquid separation is carried out by decantation, filtration or centrifugation.

9. The method according to any of claims 1 to 8, **characterized in that** said solid phase based on calcium sulfate dehydrate with depleted cadmium content is stored and/or recycled.

10. The method according to any of claims 1 to 9, **characterized in that** said aqueous alkaline metal sulfate solution used for the extraction step contains at least one complexing agent which promotes passing and maintaining of cadmium in solution.

11. The method according to one of claims 1 to 10, **characterized in that** it comprises recovery of cadmium from said aqueous solution containing alkaline metal sulfate and cadmium in solution, and optionally recycling of a decadmiated aqueous alkaline metal sulfate solution to the extraction step.

12. The method according to claim 11, **characterized in that** said recovery may be accomplished via a chemical or electrochemical route or by ion exchange.

13. The method according to claim 12, **characterized in that** the recovery via a chemical route comprises addition of an alkaline metal sulfide to said aqueous phase containing alkaline metal sulfate and cadmium in solution, precipitation of a solid phase mainly containing cadmium sulfide, and separation of this solid phase from a decadmiated aqueous alkaline metal sulfate solution.

14. The method according to either one of claims 6 and 7, **characterized in that** said co-crystallization comprises introducing into the aqueous cadmium-containing solution to be decadmiated a calcium compound capable of forming in this solution a calcium sulfate anhydrite and/or hemihydrate precipitate.

15. The method according to claim 14, **characterized in that** it comprises recycling of said solid phase based on calcium sulfate dihydrate with depleted cadmium content in said co-crystallization, as the aforesaid calcium compound.

## Patentansprüche

1. Verfahren zur Behandlung cadmiumhaltiger Feststoffe, die Calciumsulfat-Anhydrit und/oder -Halbhydrat aufweisen, welche(s) einen Gehalt an Cadmium aufweist/aufweisen,
**dadurch gekennzeichnet, dass** es Folgendes umfasst
- eine Cadmiumextraktion, ausgehend von den cadmiumhaltigen Feststoffen, indem diese mit einer wässrigen Alkalimetallsulfatlösung in Kontakt gebracht werden, und
- eine fest/flüssig-Trennung zwischen einer Feststoffphase auf Basis von Calciumsulfat-Dihydrat mit einem Cadmiumgehalt, der gegenüber dem Cadmiumgehalt des Calciumsulfat-Anhydrits und/oder Halbhydrats verringert ist, und einer wässrigen Phase, die Alkalimetallsulfat und Cadmium in Lösung enthält.

2. Verfahren nach Anspruch 1, **dadurch gekennzeichnet, dass** die wässrige Alkalimetallsulfatlösung eine Konzentration an Sulfat aufweist, die im Bereich von 1 Gewichts% und dem Grenzwert der Wasserlöslichkeit des Alkalimetallsulfats liegt.

3. Verfahren nach einem der Ansprüche 1 und 2, **dadurch gekennzeichnet, dass** die Extraktion in einem Milieu erfolgt, das einen Feststoffgehalt im Bereich von 0,5 bis 50 Gewichts% aufweist.

4. Verfahren nach einem der Ansprüche 1 bis 3, **dadurch gekennzeichnet, dass** die Extraktion unter Aufrechterhaltung einer Temperatur im Bereich von 5 bis 60 °C, vorzugsweise von 5 bis 30 °C, erfolgt.

5. Verfahren nach einem der Ansprüche 1 bis 4, **dadurch gekennzeichnet, dass** die Extraktion bei einem pH-Wert im Bereich von 1 bis 6, vorzugsweise von 3 bis 6, erfolgt.

6. Verfahren nach einem beliebigen der Ansprüche 1 bis 5, **dadurch gekennzeichnet, dass** die cadmiumhaltigen Feststoffe aus einem Verfahren zum Entfernen von Cadmium aus einer cadmiumhaltigen wässrigen Lösung stammen, wobei eine co-Kristallisation von Cadmium mit Calciumsulfat-Anhydrit und/oder -Halbhydrat erfolgt.

7. Verfahren nach Anspruch 6, **dadurch gekennzeichnet, dass** das Cadmiumentfernungsverfahren auf eine phosphor-, schwefel-, phosphor- und schwefel-, oder stickstoffhaltige wässrige Lösung oder auf eine Lösung, die aus einer Mischung zweier oder mehrerer Säuren besteht, insbesondere auf eine cadmiumhaltige Phosphorsäurelösung, angewendet wird.

8. Verfahren nach einem der Ansprüche 1 bis 7, **dadurch gekennzeichnet, dass** die fest/flüssig-Trennung durch Dekantieren, Filtrieren oder Zentrifugieren erfolgt.

9. Verfahren nach einem beliebigen der Ansprüche 1 bis 8, **dadurch gekennzeichnet, dass** die Festphase auf Basis von Calciumsulfat-Dihydrat mit einem verringerten Cadmiumgehalt zwischengelagert und/oder wiederverwertet wird.

10. Verfahren nach einem beliebigen der Ansprüche 1 bis 9, **dadurch gekennzeichnet, dass** die wässrige Alkalimetallsulfatlösung, welche für den Extraktionsschritt verwendet wird, mindestens ein Komplexierungsmittel enthält, welches begünstigend darauf wirkt, dass das Cadmium in Lösung geht und in Lösung verbleibt.

11. Verfahren nach einem der Ansprüche 1 bis 10, **dadurch gekennzeichnet, dass** es eine Rückgewinnung des Cadmiums umfasst, und zwar ausgehend von der wässrigen Phase, die Alkalimetallsulfat und Cadmium in Lösung enthält, sowie möglicherweise eine Wiederverwertung einer wässrigen Alkalimetallsulfatlösung, aus welcher im Extraktionsschritt das Cadmium entfernt wurde.

12. Verfahren nach Anspruch 11, **dadurch gekennzeichnet, dass** die Rückgewinnung auf chemischem oder elektrochemischem Wege oder durch Ionenaustausch erfolgen kann.

13. Verfahren nach Anspruch 12, **dadurch gekennzeichnet, dass** die Rückgewinnung auf chemischem Wege einen Zusatz von Alkalimetallsulfid zu der wässrigen Phase, die Alkalimetallsulfat und Cadmium in Lösung enthält, eine Ausfällung einer Festphase, die hauptsächlich Cadmiumsulfid enthält, und eine Abtrennung dieser Festphase ausgehend von einer wässrigen Alkalimetallsulfatlösung, aus welcher das Cadmium entfernt wurde, umfasst.

14. Verfahren nach einem beliebigen der Ansprüche 6 und 7, **dadurch gekennzeichnet, dass** die co-Kristallisation ein Versetzen der cadmiumhaltigen wässrigen Lösung, aus welcher das Cadmium entfernt werden soll, mit einer Calciumverbindung umfasst, die dazu befähigt ist, in dieser Lösung einen Niederschlag von Calciumsulfat-Anhydrit und/oder-Halbhydrat zu bilden.

15. Verfahren nach Anspruch 14, **dadurch gekennzeichnet, dass** es eine Wiederverwertung der Festphase auf Basis von Calciumsulfat-Dihydrat mit verringertem Cadmiumgehalt bei der co-Kristallisation umfasst, und zwar als Calciumverbindung gemäß den obigen Ausführungen.
